(19) Europäisches Patentamt
European Patent Office
Office européen des brevets

(11) Veröffentlichungsnummer: **0 007 499**
**B1**

(12) **EUROPÄISCHE PATENTSCHRIFT**

(45) Veröffentlichungstag der Patentschrift: **10.11.82**

(51) Int. Cl.³: **C 08 J 9/08**

(21) Anmeldenummer: **79102326.0**

(22) Anmeldetag: **09.07.79**

# (54) Verfahren zum Verschäumen von Kunststoffen und die nach diesem Verfahren geschäumten Kunststoffe.

(30) Priorität: **21.07.78 CH 7906/78**

(43) Veröffentlichungstag der Anmeldung: **06.02.80 Patentblatt 80/3**

(45) Bekanntmachung des Hinweises auf die Patenterteilung: **10.11.82 Patentblatt 82/45**

(84) Benannte Vertragsstaaten: **DE FR GB**

(56) Entgegenhaltungen:
**US-A-3 507 900**
**US-A-3 793 254**

(73) Patentinhaber: **CIBA-GEIGY AG, Patentabteilung Postfach, CH-4002 Basel (CH)**

(72) Erfinder: **Kirchmayr, Rudolf, Dr., Ettingerstrasse 9, CH-4147 Aesch (CH)**
Erfinder: **Fussenegger, Werner, Fasanenstrasse 150/5, CH-4058 Basel (CH)**
Erfinder: **Illy, Hugo, Dr., Hubackerweg 35, CH-4153 Reinach (CH)**

**EP 0 007 499 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zum Verschäumen von Kunststoffen und die nach diesem Verfahren geschäumten Kunststoffe

Die Erfindung betrifft ein Verfahren zum Verschäumen von thermoplastischen Kunststoffen durch Zusatz von chemischen Treibmitteln, die sich in der Wärme unter Gasentwicklung zersetzen.

Die Herstellung geschäumter Formstücke aus thermoplastischen Kunststoffen durch Zusatz von chemischen Treibmitteln bei der formgebenden Verarbeitung, beispielsweise durch Spritzgiessen oder Extrudieren, ist seit längerem bekannt. Die Zersetzung des Treibmittels erfolgt dabei in der plastifizierten Kunststoffmasse und die Zersetzungstemperatur soll zwischen der Erweichungstemperatur des Kunststoffes und der maximalen Verarbeitungstemperatur liegen. Vorzugsweise soll die Zersetzungstemperatur des Treibmittels etwa 20° C unter der maximalen Verarbeitungstemperatur liegen, um eine gleichmässige Zellstruktur und maximale Treibmittelausnutzung zu erreichen.

Die Zersetzung des Treibmittels soll deshalb in einem relativ engen Temperaturbereich erfolgen. Das bei der Zersetzung entstehende Gas soll geruchlos und inert sein. Das Treibmittel soll sich entweder restlos in gasförmige Spaltprodukte zersetzen oder die nicht-gasförmigen Spaltprodukte sollen im Kunststoff löslich sein und dürfen nicht zu Verfärbungserscheinungen oder Veränderungen der physikalischen oder chemischen Eigenschaften des Kunststoffes führen.

Die bisher bekannten Treibmittel erfüllen meist nicht alle diese Anforderungen und sind daher meist nur für bestimmte Anwendungsgebiete brauchbar. So spalten z.B. organische Hydrazide und Semicarbazide Ammoniak ab, durch den Polyester oder Polycarbonate ammonolytisch abgebaut werden können. Das bekannte Azodicarbonamid bildet feste Zersetzungsrückstände, die in den üblichen Thermoplasten unlöslich sind. Seine Verwendung ist ausserdem mit einer erheblichen Geruchsbelästigung beim Versäumen verbunden. Es wurde auch bereits das 5-Phenyltetrazol als Treibmittel vorgeschlagen, vor allem für das Verschäumen von Thermoplasten mit relativ hohen Verarbeitungstemperaturen. Dieses Treibmittel führt weder zu Geruchsbelästigung noch zu Rückstandsbildung, liefert aber eine geringere Gasausbeute als Azodicarbonamid und neigt zu Verfärbungen.

Aus der US-A-3507900 ist bekannt, dass Dioxazolone durch Erhitzen auf 50–325° C in Isocyanate übergeführt werden können. Obwohl nicht beschrieben, kann der Fachmann schliessen, dass diese Pyrolyse unter Abspaltung von $CO_2$ erfolgt. In den gezeigten Beispielen wird die Pyrolyse durch plötzliches Erhitzen auf 300° C durchgeführt. Es ist daraus nicht zu entnehmen, ob diese Reaktion zum Verschäumen von thermoplastischen Kunststoffen geeignet ist, da auf den Verlauf der $CO_2$-Abspaltung bei langsamem Aufheizen nicht geschlossen werden kann.

Aus der US-A-3793254 ist bekannt, dass Dioxazolone mit OH-, NH- oder SH-Gruppen enthaltenden Verbindungen unter Bildung von Harnstoffen, Urethanen oder Thiourethanen unter gleichzeitiger $CO_2$-Abspaltung reagieren. Die dort beschriebenen Reaktionen verlaufen bei 50–150° C. Ein solcher Temperaturbereich ist jedoch für das Verschäumen von thermoplastischen Kunststoffen wenig interessant. Auch ist es gewünscht, dass das Treibmittel aus einer Komponente und nicht aus zwei miteinander reagierenden Komponenten besteht.

Zweck der Erfindung war es, chemische Treibmittel zum Verschäumen von thermoplastischen Kunststoffen zu finden, die die oben geschilderten Nachteile nicht haben und dabei eine höhere Gasausbeute ergeben.

Gegenstand der Erfindung ist ein Verfahren zum Verschäumen von thermoplastischen Kunststoffen durch Zusatz von 0,05 bis 5 Gew.-% eines Dioxazolons der Formel I

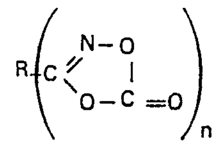 (I),

worin n 1, 2 oder 3 ist, und bei n=1

R $C_1$–$C_{12}$ Alkyl, $C_2$–$C_{12}$ Alkenyl, $C_7$–$C_9$ Aralkyl, $C_3$–$C_6$ Cycloalkyl, $C_6$–$C_{10}$ Aryl, durch $C_1$–$C_9$ Alkyl, Halogen, $C_1$–$C_9$ Alkoxy oder Nitro substituiertes Phenyl oder ein heterocyclischer Rest ist, oder bei n=2

R $C_1$–$C_8$ Alkylen, Aethenylen, m- oder p-Phenylen, m- oder p-Halogenphenylen, Biphenylen, Oxy-bis-(p-phenylen), 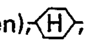 2,5-Thienylen, 2,5-Furylen, 2,6-Pyridylen oder Naphthylen ist, oder bei n=3

R Phenenyl ist,

zum Kunststoff und Erhitzen des Gemisches.

R ist als $C_1$–$C_{12}$ Alkyl verzweigtes oder geradkettiges Alkyl, insbesondere mit 1–6 C-Atomen, wie Methyl, Aethyl oder Isopropyl. R ist als $C_2$–$C_{12}$ Alkenyl verzweigtes oder insbesondere geradkettiges Alkenyl, insbesondere mit 2–6 C-Atomen, wie Vinyl. R ist als $C_7$–$C_9$ Aralkyl insbesondere Benzyl, als $C_3$–$C_6$ Cycloalkyl insbesondere Cyclopentyl oder Cyclohexyl. R ist als $C_6$–$C_{10}$ Aryl insbesondere Phenyl oder Napthyl, als durch $C_1$–$C_9$ Alkyl substituiertes Phenyl insbesondere $C_1$–$C_4$ Alkyl-phenyl, wie Methylphenyl, als durch Halogen substituiertes Phenyl insbesondere Chlorphenyl, Bromphenyl oder Dichlorphenyl, als durch $C_1$–$C_9$ Alkoxy substituiertes Phenyl insbesondere Methoxyphenyl. R ist als heterocyclischer Rest insbesondere ein aromatischer heterocyclischer Rest, wie Thienyl, Furyl oder Pyridyl.

R ist als $C_1$–$C_8$ Alkylen verzweigtes oder insbesondere geradkettiges Alkylen, vor allem mit 1–4 C-Atomen, wie Methylen, Aethylen, 1,3-Propylen oder 1,4-Butylen. R ist als m- oder p-Halogenphenylen z.B. 2,5-Dichlorphenylen-1,4 oder 2,5-Dibromphenylen-1,4.

Bevorzugt verwendet werden Verbindungen

der Formel I, worin n 1 oder 2 ist, und bei n=1 R $C_1$–$C_{12}$ Alkyl, Phenyl oder Phenyl substituiert durch Methyl, Chlor, Methoxy oder Nitro ist, oder bei n=2 R $C_1$–$C_4$ Alkylen, Aethenylen, m- oder p-Phenylen, 2,5-Thienylen, 2,6-Pyridylen oder Naphthylen ist.

Besonders bevorzugt sind auch folgende beispielhafte Verbindungen und insbesondere die in den Ausführungsbeispielen verwendeten Verbindungen:

2-Methyl-1,3,4-dioxazolon-(5)
2-Aethyl-1,3,4-dioxazolon-(5)
2-Isopropyl-1,3,4-dioxazolon-(5)
2-Vinyl-1,3,4-dioxazolon-(5)
2-Benzyl-1,3,4-dioxazolon-(5)
2-Cyclohexyl-1,3,4-dioxazolon-(5)
2-Cyclopentyl-1,3,4-dioxazolon-(5)
2-Phenyl-1,3,4-dioxazolon-(5)
2-(2-Methylphenyl)-1,3,4-dioxazolon-(5)
2-(4-Methylphenyl)-1,3,4-dioxazolon-(5)
2-(4-Chlorphenyl)-1,3,4-dioxazolon-(5)
2-(3,4-Dichlorphenyl)-1,3,4-dioxazolon-(5)
2-(4-Methoxyphenyl)-1,3,4-dioxazolon-(5)
2-(3-Nitrophenyl)-1,3,4-dioxazolon-(5)
2-Thienyl-1,3,4-dioxazolon-(5)
2-Furyl-(1,3,4-dioxazolon-(5)
2-Pyridyl-1,3,4-dioxazolon-(5)
2-Naphthyl-1,3,4-dioxazolon-(5)
1,1-Bis-[1,3,4-dioxazolon-(5)-yl-(2)]-methan
1,2-Bis-[1,3,4-dioxazolon-(5)-yl-(2)]-äthan
1,4-Bis-[1,3,4-dioxazolon-(5)-yl-(2)]-butan
1,2-Bis-[1,3,4-dioxazolon-(5)-yl-(2)]-äthylen
1,4-Bis-[1,3,4-dioxazolon-(5)-yl-(2)]-benzol
1,3-Bis-[1,3,4-dioxazolon-(5)-yl-(2)]-benzol
1,4-Bis-[1,3,4-dioxazolon-(5)-yl-(2)]-2,5-dichlorbenzol
1,4-Bis-[1,3,4-dioxazolon-(5)-yl-(2)]-2,5-dibrombenzol
1,4-Bis-[1,3,4-dioxazolon-(5)-yl-(2)]-naphthalin
2,6-Bis-[1,3,4-dioxazolon-(5)-yl-(2)]-naphthalin
4,4-Bis-[1,3,4-dioxazolon-(5)-yl-(2)]-diphenyl
4,4-Bis-[1,3,4-dioxazolon-(5)-yl-(2)]-diphenyläther
2,5-Bis-[1,3,4-dioxazolon-(5)-yl-(2)]-thiophen
2,5-Bis-[1,3,4-dioxazolon-(5)-yl-(2)]-furan
2,6-Bis-[1,3,4-dioxazolon-(5)-yl-(2)]-pyridin
1,3,5-Tris-[1,3,4-dioxazolon-(5)-yl-(2)]-benzol.

Die Verbindungen der Formel I sind bekannt. Sollte eine noch neue Verbindung unter ihnen sein, so kann sie in an sich bekannter Weise und in Analogie zu den bekannten Verbindungen hergestellt werden. So beschreibt Beck in Ber. 84, 688-689 (1951) eine Synthese, nämlich die Umsetzung von Hydroxamsäuren mit Phosgen, sodass die Herstellung von Verbindungen der Formel I dadurch erfolgen kann, dass man eine Hydroxamsäure der Formel II

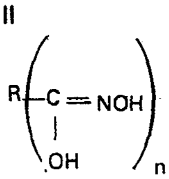

(II)

mit Phosgen umsetzt, vorteilhaft, indem man Phosgen in eine Lösung der Hydroxamsäure in einem inerten Lösungsmittel, wie Aether, Tetrahydrofuran, Benzol, Toluol oder Chlorbenzol einleitet. Aus der genannten Publikation sind Verbindungen der Formel I zum Zwecke wissenschaftlicher Untersuchungen von Stereoisomerie bekannt. Aus zahlreichen anderen Druckschriften sind Verbindungen der Formel I bekannt als polymerisierbare Monomere, z.B. aus der US-A-3560492 oder der DE-A-1959203, ohne aber auf eine Verwendung gemäss der vorliegenden Erfindung hinzuweisen oder diese nahezulegen.

Thermoplastische Kunststoffe, die sich erfindungsgemäss verschäumen lassen, sind beispielsweise Polyolefine wie Polyäthylen oder Polypropylen, Polystyrol oder Styrol-Copolymerisate wie IPS- oder ABS-Polymere, Polyvinylchlorid, Polyacetale, Polycarbonate, aromatische Polyäther, Polysulfone und Polysulfonäther, Polyester wie Polyäthylen- oder Polybutenylenterephthalat, Polyamide wie Poly-ca-prolactam und Nylon 6,6 sowie Gemische solcher Polymerer. Da sich die Zersetzungstemperatur der Verbindungen der Formel I durch die Wahl des Substituenten R in gewissen Grenzen varrieren lässt, können Kunststoffe mit verschiedenen Verarbeitungstemperaturen verschäumt werden.

Auf diese Weise eignen sich die Verbindungen der Formel I zum Verschäumen bei Temperaturen von 160° bis über 300° C, vorzugsweise bei 180° bis 280° C. Daher eignet sich das erfindungsgemässe Verfahren vorzugsweise zum Verschäumen von Polypropylen, Polystyrol, Styrol-Copolymeren, Polycarbonaten, Polyamiden, aromatischen Polyäthern, Polyestern und Polysulfonen. Besonders geeignet ist das Verfahren zum Verschäumen von Polycarbonaten, Polyestern und aromatischen Polyäthern.

Der Zusatz der Treibmittel zu den Kunststoffen kann durch trockenes Mischen geschehen, wobei man vorzugsweise ein Haftmittel zusetzt. Als Haftmittel können beispielsweise langkettige Fettsäuren oder deren Salze, Ester oder Amide verwendet werden. Die Treibmittel können weiterhin auch in gelöster Form oder in Form eines Masterbatch zugesetzt werden. Allgemein gilt, dass der Schaum umso feinporiger und homogener wird, je gleichmässiger das Treibmittel mit dem Kunststoff vermischt ist.

Das Verschäumen des Gemisches aus Kunststoff und Treibmittel erfolgt nach bekannten Verfahren durch Erhitzen unter gleichzeitiger Formgebung. Die wichtigsten Methoden sind das Spritzgiessen und das Extrudieren.

Die Menge des Treibmittelzusatzes richtet sich in erster Linie nach dem gewünschten Verschäumungsgrad, sie richtet sich auch nach der jeweiligen Gasausbeute des verwendeten Treibmittels. Man verwendet 0,05 bis 5 Gew.-% Treibmittel, vorzugsweise 0,1 bis 2 Gew.-%.

Die verwendeten Kunststoffe können Zusätze enthalten wie sie in der Kunststoff-Technologie üblich sind, wie z.B. Füll- und Verstärkungsmittel, Glasfasern, Pigmente, Gleitmittel, Stabilisatoren, Antistatica, Nukleierungsmittel, Flammschutzmittel, Weichmacher, Emulgatoren oder optische

Aufheller. Solche Zusatzstoffe können gleichzeitig mit den Treibmitteln zugesetzt werden.

Die folgenden Beispiele erläutern die Verwendung der Verbindungen der Formel I. Darin sind unter Teilen Gewichtsteile zu verstehen, die Temperaturen sind in Celsiusgraden angegeben und Prozente sind Gewichts-Prozente, soweit nicht anders angegeben.

Beispiel 1

Ein handelsübliches granuliertes Polycarbonat, das 5% Glasfasern enthält (Lexan®FL 900 der Fa. General Electric), mit einer Viskositätzahl von 0,469 und einer Dichte von 1,2 g/ccm wird 4 Stunden im einem Ofen bei 120° getrocknet. Dann wird es mit 0,1% Butylstearat 20 Minuten vorgemischt um die Haftung des Treibmittels zu gewährleisten, durch Umwälzen mit 0,21% 1,4-Bis-[1,3,4-dioxazolon-(5)-yl-(2)]benzol gemischt und im Rhönradmischer weitere 20 Minuten gemischt.

Die Mischung wird in einer Spritzgussmaschine zu rechteckigen Platten von 80×50×6 mm verarbeitet. Die Zylindertemperaturen betragen 270/300 und 290°. Bei einer Formtemperatur von 120° C beträgt die Abkühlzeit 80 Sekunden. Das erhaltene Formstück hat eine Viskositätzahl von 0,439 und eine Dichte von 0,85 g/cm$^3$. Es hat eine glatte Oberfläche und einen geschäumten Kern mit feiner gleichmässiger Poren-Struktur und zeigt keine Verfärbung.

Beispiel 2

Ein handelsübliches granuliertes Poly-butylenterephthalat (Crastin®SK 605 der Fa. Ciba-Geigy AG) mit einem Glasfasergehalt von 30 Gew.-% und einer Dichte von 1,53 g/cm$^3$ wird 8 Stunden bei 100° in Vakuum getrocknet und mit 0,1% Butylstearat und 0,25% 2-Phenyl-1,3,4-dioxazolon-(5) vermischt. Die Mischung wird wie bei Beispiel 1 beschrieben zu Platten verarbeitet, jedoch beträgt die Temperatur der einzelnen Heizzonen der Spritzgussmaschine 230/260 und 260°. Die erhaltenen Platten haben eine Dichte von 0,8 g/cm$^3$.

Beispiel 3

Ein handelsübliches Polycarbonat-Granulat (Lexan®FL 900 der Fa. General Electric) wird auf einer Mühle zu einer Korngrösse von 315 µm vermahlen. Das Polycarbonat enthält 5% Glasfasern, und hat eine Dichte von 1,2 g/cm$^3$. Das Polymer wird vor der Verarbeitung in einem Umluftofen während 4 Stunden bei 120° C getrocknet. Dann werden jeweils 50 g des getrockneten Polycarbonat-Pulvers mit 0,3 g 1,4-Bis-[1,3,4-dioxazolon-(5)-yl-(2)]-benzol homogen vermischt.

Jeweils 6 g des Gemisches werden in eine verschraubbare zylindrische Aluminiumform von 11 cm$^3$ Inhalt gefüllt und die verschlossene Form in einen 340° heissen Ofen gegeben. Nach einer Verweilzeit von 12 Minuten – der geschäumte Kunststoff erreicht dabei eine Temperatur von maximal 320° – wird die Form dem Ofen entnommen und mit kaltem Wasser abgekühlt. Die der Form entnommenen Proben haben eine Dichte von 0,47–0,50 g/cm$^3$, eine glatte Oberfläche und einen geschäumten Kern. Gegenüber einer Vergleichsprobe ohne Treibmittel zeigen die geschäumten Proben keine Farbveränderung. Analoge Ergebnisse werden mit 1,4-Bis-[1,3,4-dioxazolon-(5)-yl-(2)]-butan und 1,2-Bis-[1,3,4-dioxazolon-(5)-yl-(2)]-äthylen erhalten.

Beispiel 4

Ein handelsübliches Polyphenylenoxid-Granulat (Noryl®FN 215 der Fa. General Electric) wurde auf einer Mühle zu einer Korngrösse von 400 µm vermahlen. Es hat eine Dichte von 1,06 g/cm$^3$ und wird vor der Verarbeitung während 3 Stunden bei 100° C im Umluftofen getrocknet. Dann werden jeweils 50 g des Polyphenylenoxidpulvers mit 0,3 g 1,4-Bis-[1,3,4-dioxazolon-(5)-yl-(2)]-benzol homogen vermischt.

Wie in Beispiel 3 beschrieben werden jeweils 7,5 g des Gemisches in einer Form von 11 cm$^3$ Inhalt durch 15 Minuten Erhitzen in einem 320° C heissen Ofen (Innentemperatur der Form max. 310°) verschäumt. Die verschäumten Proben haben einen geschäumten Kern bei einer Dichte von 0,58–0,71 g/cm$^3$. Die verwendeten Treibmittel bewirken keine Farbveränderung.

Beispiel 5

Ein handelsübliches Polybutylenterephthalat (Crastin®S 600 der Fa. Ciba-Geigy AG) wird auf einer Mühle zu einer Korngrösse von 400 µm vermahlen. Es hat eine Dichte von 1,31 g/cm$^3$ und wird vor der Verarbeitung während 8 Stunden bei 100° im Vakuumtrockenschrank getrocknet. Dann werden jeweils 50 g des PBT-Pulvers mit 0,3 g 2-Phenyl-1,3,4-dioxazolon-(5) homogenisiert.

Jeweils 6 g dieser Mischungen werden wie in Beispiel 3 beschrieben in geschlossener Form in einem 320° C heissen Ofen 12 Minuten erhitzt (Innentemperatur der Form max. 300° C). Die erhaltenen Formstücke haben eine Dichte von 0,48–0,50 g/cm$^3$, eine glatte Oberfläche und einen geschäumten Kern. Analoge Ergebnisse werden erziehlt, wenn man anstelle von 2-Phenyl-1,3,4-dioxazolon-(5) 0,3 g 2-Isopropyl-1,3,4-dioxazolon-(5) als Treibmittel verwendet.

Beispiel 6

Ein handelsübliches Polyamid 6 (Grilon®A 28 der Fa. Emser-Werke AG) wird auf einer Mühle auf eine Korngrösse von 400 µm vermahlen. Es hat eine Dichte von 1,14 g/cm$^3$ und wird vor der Verarbeitung während 8 Stunden bei 80° C im Vakuumtrockenschrank getrocknet. Dann werden jeweils 50 g des Polyamid-Pulvers mit 0,3 g 2-Phenyl-1,3,4-dioxazolon homogen vermischt.

Jeweils 6,5 g dieser Mischung werden wie in Beispiel 3 beschrieben in einer geschlossenen Form in einem 340° heissen Ofen 10 Minuten erhitzt (Innentemperatur der Form max. 285° C). Die erhaltenen Formstücke haben einen geschäumten Kern bei einer Dichte von 0,51–0,54 g/cm$^3$. Das verwendete Treibmittel bewirkt keine Farbveränderung.

Beispiel 7

Von einem handelsüblichen Polypropylenpulver (Propathene®HF 20 der Fa. Imperial Chemical Industriers) mit einer Dichte von 0,9g/$cm^3$ und einer Korngrösse von 250µm werden jeweils 50g mit 0,3g 1,4-Bis-[1,3,4-dioxazolon-(5)-yl-(2)]-benzol und 0,05g eines handelsüblichen Antioxidans (Irganox 1010 der Ciba-Geigy AG) homogen vermischt. Jeweils 5,5g dieser Mischung werden wie in Versuch 3 beschrieben in einer geschlossenen Form verschäumt indem die Form 12 Minuten in einem 375° heissen Ofen erhitzt wird (Innentemperatur der Form max. 330° C). Die entnommenen Proben haben eine Dichte von 0,45g/$cm^3$, eine glatte Oberfläche und einen geschäumten Kern. Das verwendete Treibmittel bewirkt keine Farbveränderung.

Beispiel 8

Ein handelsübliches Niederdruck-Polyäthylen (Vestolen®A 6016 der Fa. Chemische Werke Hüls AG) mit einer Dichte von 0,962g/$cm^3$ wird auf einer Mühle zu einer Korngrösse von 315µ vermahlen.

50g des Polyäthylenpulvers werden mit 0,3g 2-Phenyl-1,3,4-dioxazolon-(5) homogen vermischt und jeweils 5g des Gemisches wie in Beispiel 3 beschrieben in einer geschlossenen Form 9 Minuten in einem 375° heissen Ofen erhitzt (Innentemperatur der Form max. 280°). Die erhaltenen Proben haben eine Dichte von 0,41g/$cm^3$, eine glatte Oberfläche und einen geschäumten Kern. Das verwendete Treibmittel bewirkt keine Farbveränderung.

Beispiel 9

50g eines schlagfesten Polystyrol-Pulvers (Versuchsprodukt der Fa. Belgochim) mit einer Korngrösse von 400µm und einer Dichte von 1,05g/$cm^3$ werden mit 0,05g eines handelsüblichen Antioxydans (Irganox 1076, Ciba-Geigy AG) und 0,3g 1,4-Bis-[1,3,4-dioxazolon-(5)-yl-(2)]-benzol homogen gemischt. 5,1g der Mischung werden wie in Beispiel 3 beschrieben verschäumt, indem die Form 15 Minuten in einem 280° heissen Ofen erhitzt wird (Innentemperatur der Form max. 258° C). Die erhaltene Probe hat eine Dichte von 0,42g/$cm^3$, eine glatte Oberfläche und einen geschäumten Kern. Das verwendete Treibmittel bewirkt keine Farbveränderung.

**Patentansprüche**

1. Verfahren zum Verschäumen von thermoplastischen Kunststoffen durch Zusatz von 0,05 bis 5 Gew.-% eines Dioxazolons der Formel

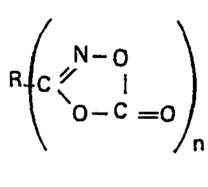

(I),

worin n 1, 2 oder 3 ist, und bei n=1

R $C_1$–$C_{12}$ Alkyl, $C_2$–$C_{12}$ Alkenyl, $C_7$–$C_9$ Aralkyl, $C_3$–$C_6$ Cycloalkyl, $C_6$–$C_{10}$ Aryl, durch $C_1$–$C_9$ Alkyl, Halogen, $C_1$–$C_9$ Alkoxy oder Nitro substituiertes Phenyl oder ein heterocyclischer Rest ist, oder bei n=2

R $C_1$–$C_8$ Alkylen, Aethenylen, m- oder p-Phenylen, m- oder p-Halogenphenylen, Biphenylen, Oxy-bis-(p-phenylen), 1,4-Cyclohexylen, 2,5-Thienylen, 2,5-Furylen, 2,6-Pyridylen oder Naphthylen ist, oder bei n=3

R Phenenyl ist,

zum Kunststoff und Erhitzen des Gemisches.

2. Verfahren nach Anspruch 1, dadurch gekennzeichnet, dass man eine Verbindung der Formel I verwendet, worin n 1 oder 2 ist, und bei n=1 R $C_1$–$C_{12}$-Alkyl, Phenyl oder Phenyl substituiert durch Methyl, Chlor, Methoxy oder Nitro ist, oder bei n=2 R $C_1$–$C_4$ Alkylen, Aethenylen, m- oder p-Phenylen, 2,5-Thienylen, 2,6-Pyridylen oder Naphthylen ist.

3. Verfahren nach Anspruch 1, dadurch gekennzeichnet, dass man 1,4-Bis-[1,3,4-dioxazolon-(5)-yl-(2)]-benzol verwendet.

4. Verfahren nach Anspruch 1, dadurch gekennzeichnet, dass man 2-Phenyl-1,3,4-dioxazolon-(5) verwendet.

5. Verfahren gemäss Anspruch 1, dadurch gekennzeichnet, dass der thermoplastische Kunststoff Polypropylen, Polystyrol, ein Styrol-Copolymerisat, ein Polycarbonat, ein Polyamid, ein aromatischer Polyäther, ein aromatischer Polyester oder ein aromatischer Polysulfon ist.

6. Verfahren gemäss Anspruch 5, dadurch gekennzeichnet, dass der Kunststoff ein Polycarbonat, ein aromatischer Polyester oder ein aromatischer Polyäther ist.

7. Verfahren gemäss Anspruch 1, dadurch gekennzeichnet, dass das Gemisch auf 230–300° C erhitzt wird.

8. Verfahren gemäss Anspruch 1, dadurch gekennzeichnet, dass 0,1 bis 2 Gew.-% einer Verbindung der Formel I zugesetzt werden.

9. Nach dem Verfahren des Anspruchs 1 geschäumter thermoplastischer Kunststoff.

**Claims**

1. A process for foaming thermoplastic materials by adding to the plastics material 0.05 to 5 per cent by weight of a dioxazolone of the formula I

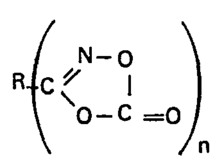

(I),

in which n is 1, 2 or 3, and when n is 1

R is $C_1$–$C_{12}$-alkyl, $C_2$–$C_{12}$-alkenyl, $C_7$–$C_9$-aralkyl, $C_3$–$C_6$-cycloalkyl, $C_6$–$C_{10}$-aryl, or phenyl substituted by $C_1$–$C_9$-alkyl, halogen, $C_1$–$C_9$-alkoxy or nitro, or it is a heterocyclic radical, or when n is 2

R is $C_1$–$C_8$-alkylene, ethenylene, m- or p-phenylene, m- or p-halophenylene, biphenylene, oxy-bis-(p-phenylene), 1,4-cyclohexylene, 2,5-thieny-

lene, 2,5-furylene, 2,6-pyridylene or naphthylene, or when n is 3

R is phenenyl,

and subsequently heating the mixture.

2. A process according to Claim 1, wherein there is used a compound of the formula I in which n is 1 or 2, and when n is 1 R is $C_1$–$C_{12}$-alkyl, phenyl or phenyl substituted by methyl, chlorine, methoxy or nitro; or when n is 2 R is $C_1$–$C_4$-alkylene, ethenylene, m- or p-phenylene, 2,5-thienylene, 2,6-pyridylene or naphthylene.

3. A process according to Claim 1, wherein 1,4-bis-[1,3,4-dioxazolon-(5)-yl-(2)]-benzene is used.

4. A process according to Claim 1, wherein 2-phenyl-1,3,4-dioxazolone-(5) is used.

5. A process according to Claim 1, wherein the thermoplastic material is: polypropylene, polystyrene, a styrene copolymer, a polycarbonate, a polyamide, an aromatic polyether, an aromatic polyester or an aromatic polysulfone.

6. A process according to Claim 5, wherein the thermoplastic material is a polycarbonate, an aromatic polyester or an aromatic polyether.

7. A process according to Claim 1, wherein the mixture is heated to 230–300° C.

8. A process according to Claim 1, wherein 0.1 to 2 per cent by weight of a compound of the formula I is added.

9. Thermoplastic material foamed by the process according to Claim 1.

**Revendications**

1. Procédé pour faire mousser des matières thermoplastiques, caractérisé en ce que l'on ajoute à la matière plastique 0,05 à 5% en poids d'une dioxazolone de formule:

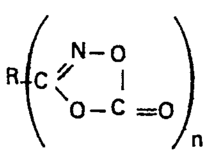

(I),

dans laquelle n vaut 1, 2 ou 3, et, lorsque n vaut 1,

R est un groupe alkyle en $C_1$–$C_{12}$, alcényle en $C_2$–$C_{12}$, aralkyle en $C_7$–$C_9$, cycloalkyle en $C_3$–$C_6$, aryle en $C_6$–$C_{10}$, phényle substitué par un groupe alkyle en $C_1$–$C_9$, par de l'halogène, par un groupe alcoxy en $C_1$–$C_9$ ou par un groupe nitro ou est un radical hétérocyclique, ou lorsque n vaut 2,

R est un groupe alkylène en $C_1$–$C_8$, éthénylène, m- ou p-phénylène, m- ou p-halogénophénylène, biphénylène, oxy-bis-(p-phénylène), cyclohexylène-1,4, thiénylène-2,5, furylène-2,5, pyridylène-2,6 ou naphthylène, ou, lorsque n vaut 3,

R est un groupe phénényle,

et l'on chauffe le mélange.

2. Procédé selon la revendication 1, caractérisé en ce qu'on utilise un composé de formule I, dans laquelle n vaut 1 ou 2 et, lorsque n vaut 1, R est un groupe alkyle en $C_1$–$C_{12}$, phényle ou phényle substitué par un groupe méthyle, par du chlore, par un groupe méthoxy ou nitro, ou bien, lorsque n vaut 2, R est un groupe alkylène en $C_1$–$C_4$, éthénylène, m- ou p-phénylène, thiénylène-2,5, pyridylène-2,6 ou naphthylène.

3. Procédé selon la revendication 1, caractérisé en ce qu'on utilise du bis-[dioxazole-1,3,4 one-5 yl-2]-1,4 benzène.

4. Procédé selon la revendication 1, caractérisé en ce qu'on utilise la phényl-2 dioxazole-1,3,4 one-5.

5. Procédé selon la revendication 1, caractérisé en ce que la matière thermoplastïque est du polypropylène, du polystyrène, un copolymère de styrène, un polycarbonate, un polyamide, un polyéther aromatique, un polyester aromatique ou une polysulfone aromatique.

6. Procédé selon la revendication 5, caractérisé en ce que la matière plastique est un polycarbonate, un polyester aromatique ou un polyéther aromatique.

7. Procédé selon la revendication 1, caractérisé en ce qu'on chauffe le mélange à 230°–300° C.

8. Procédé selon la revendication 1, caractérisé en ce qu'on ajoute 0,1 à 2% en poids d'un composé de formule I.

9. Matière thermoplastique mise sous forme de mousse par application du procédé selon la revendication 1.